# EUROPEAN PATENT SPECIFICATION

(11) **EP 2 936 972 B1**
(45) Date of publication and mention of the grant of the patent: **19.10.2016**
(21) Application number: 15164533.0
(22) Date of filing: 21.04.2015
(51) Int. Cl.: A01G 17/08

(54) **APPARATUS FOR LAYING WIRE TIES**
VORRICHTUNG ZUR ANLAGE VON DRAHTBINDUNGEN
APPAREIL DE POSE D'ATTACHES DE FILS MÉTALLIQUES

(30) Priority: 22.04.2014 IT PD20140108
(43) Date of publication of application: 28.10.2015
(73) Proprietor: Zanon S.R.L., 35011 Campodarsego PD (IT)
(72) Inventor: Zanon, Franco, 35011 Campodarsego PD (IT)
(74) Representative: Modiano, Micaela Nadia

(56) References cited:
- EP-A1- 1 322 148
- FR-A1- 2 780 702
- US-B1- 8 281 712

## Description

The present invention relates to an apparatus for laying wire ties.

In fields such as viticulture and floriculture, as well as for fruit plants and vegetable crops, it is often necessary to secure the plants or the branches to adapted supports in order to guide their growth.

For example, fruit canes of vines are tied to props in the position provided by the type of growing.

Tying is currently performed with ties to be applied entirely manually or by means of manual or automatic applicators.

During this operation, it is necessary to surround the branch and the prop with the tie and fasten them tightly together, twisting together the two free ends of the tie.

When this is done manually, it is therefore slow and difficult as well as tiring for the operator.

In order to facilitate and speed up the operation, it is possible to use manual tying tools, which substantially consist of pliers provided with a magazine of metallic clips. The tying tool must be placed so as to contain the branch and the prop between the two movable arms, so that by tightening the grip on the handle the clip is bent around them.

In order to reduce tying times further, so as to improve productivity, automatic tying tools are also used which are fed continuously by a spool of flexible wire to be cut and closed around the branch and the prop, twisting its ends together.

Two main types of automatic tying tool are currently known: those that push the flexible wire around the two items to be tied, for example by moving it by means of traction rollers, and those that instead pull it around the two items.

Some of these use a single motor, such as for example the one described in EP0763323, which, by pushing the flexible wire, surrounds with it the two items to be tied, for example moving the wire by means of a hook-like oscillating guide, cuts it and also twists together its ends by means of a twister.

However, the mechanisms used are very complicated in order to ensure operation by means of a single motor, and the power available is not always sufficient to perform every operation perfectly.

In order to obviate this drawback, automatic tying tools with two motors have been provided.

In particular, according to the solution disclosed in EP 1322148, a first motor is preset to push the flexible wire, feeding a curved slot to be closed onto itself to surround the items around which the tie is to be tightened, and also closes and opens the curved slot, while a second motor drives a twister and guides a wire cutting device.

This solution, too, is constructively complicated, and each one of the motors must supply enough power to move a plurality of components.

The aim of the present invention is to provide an apparatus for laying wire ties with mechanisms that are simpler than those proposed so far.

Within this aim, an object of the invention is to devise an apparatus for laying wire ties, comprising, on a supporting body:
- a front portion, which in turn comprises a hook-shaped guide that is open inwardly, with a movable end portion to be closed on an abutment element so as to surround the items to be tied,
- a first motor, for moving said movable portion of the hook-shaped guide,
- a second motor, for the continuous feeding of a flexible wire in succession along a rear portion of said apparatus, along said hook-shaped guide and along said abutment element, when said movable portion is closed on the latter,
- means for cutting said flexible wire, so as to separate a tie thereof that substantially occupies said front portion,
- a third motor for the rotation of a twister adapted to twist a first portion of said tie with a last portion.

Further characteristics and advantages of the invention will become better apparent from the description of a preferred but not exclusive embodiment of the apparatus according to the invention, illustrated by way of non-limiting example in the accompanying drawings, wherein:
Figure 1 is a partially sectional perspective view of the apparatus according to the invention in a tying step that precedes the closure of the movable portion of the hook-shaped guide;
Figure 2 is a view, similar to the view of Figure 1, of the apparatus according to the invention, in a step of use with the movable portion closed onto the abutment element;
Figure 3 is another view of the apparatus according to the invention like Figures 1 and 2, in another step of use with the movable portion closed on the abutment element;
Figure 4 is an enlarged-scale view of the front portion of the apparatus according to the invention;
Figure 5 is a front view of the apparatus according to the invention;
Figure 6 is a side view of the apparatus according to the invention;
Figure 7 is a side view of an inner part of the apparatus according to the invention.

With reference to the figures, the apparatus according to the invention is generally designated by the reference numeral 10.

The apparatus 10 is shown without an external enclosure in order to show its internal components.

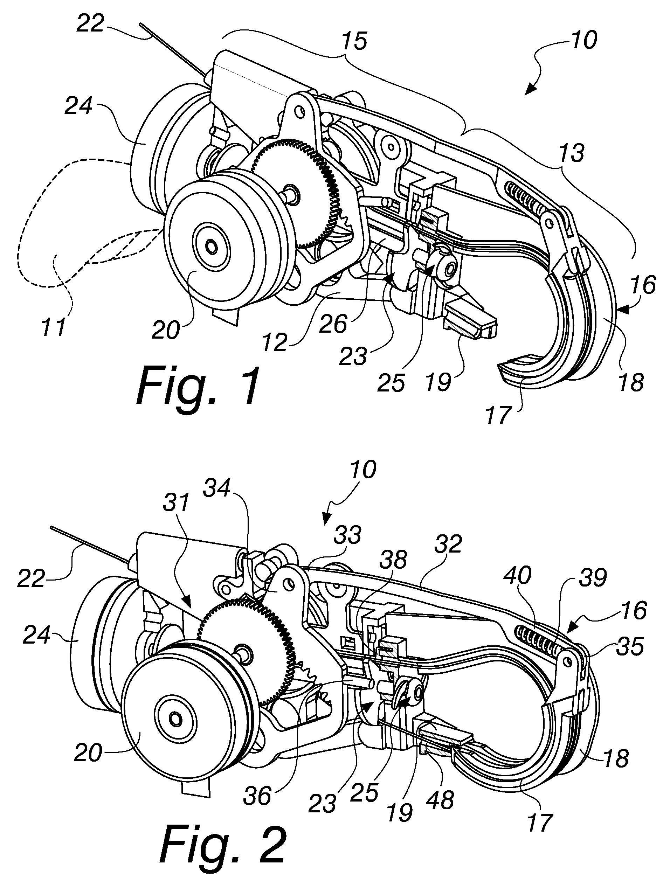

Figure 1 shows in broken lines the handle 11.

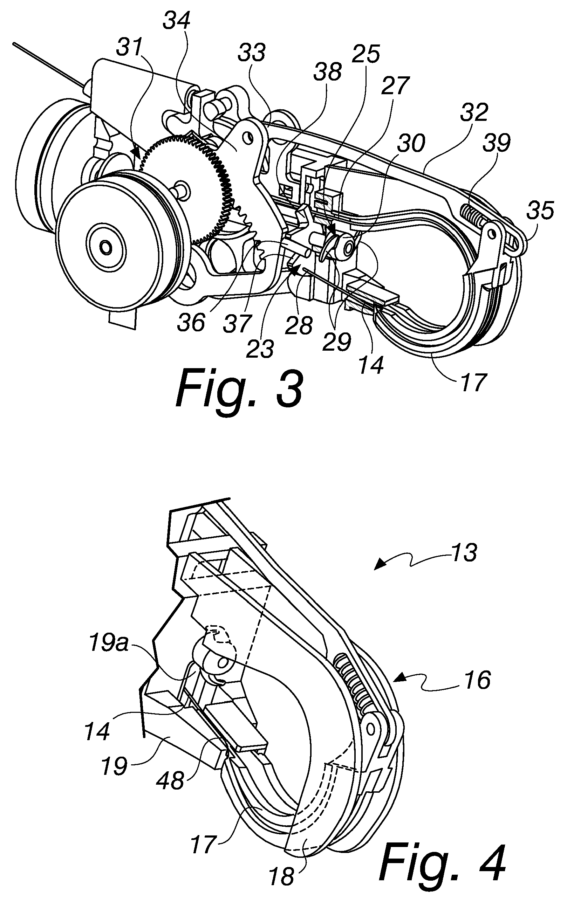

As indicated, the apparatus 10 comprises, on a frame-like supporting body 12, a front portion 13, at which a tie 14 is tied around two items to be tied together, such as for example a shoot with a prop, and a rear portion 15, where the mechanisms of the movable parts and the corresponding motors are installed. The tie 14 is shown in Figure 3.

The front portion 13 in turn comprises a hook-shaped guide 16, which is open inwardly, with a movable end portion 17 preset to rotate with respect to a fixed portion 18 in order to close on an abutment element 19 so as to surround the items to be tied.

The abutment element 19 also is arranged substantially in the front portion 13 of the apparatus 10.

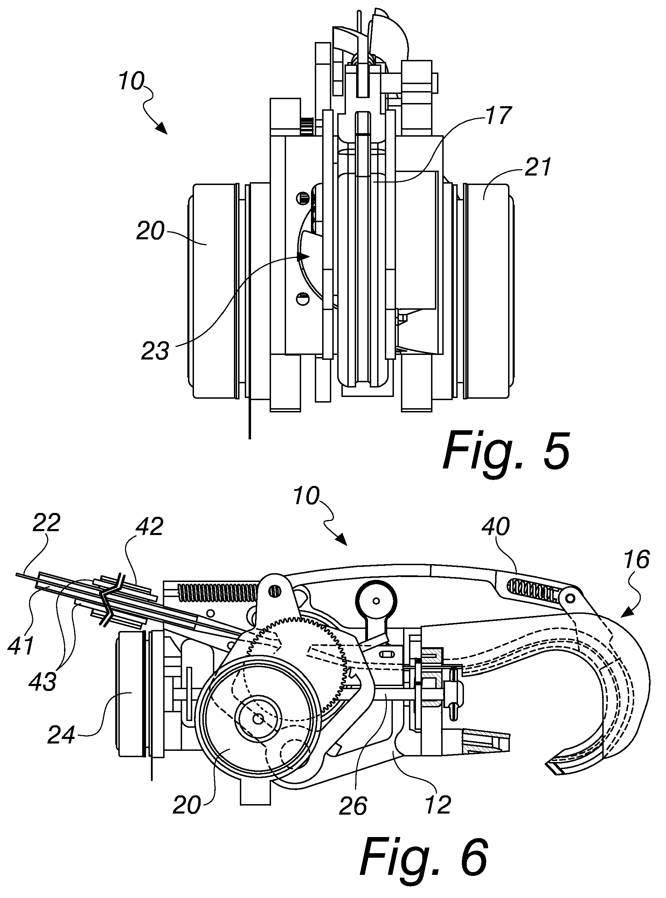

The apparatus 10 also comprises, at its rear portion 15, three motors, of which a first motor 20 for moving the movable portion 17 of the hook-shaped guide 16. The first motor 20 is arranged on the left side of the apparatus 10 with respect to the front view of Figure 5.

A second motor 21 is installed on the opposite side with respect to the preceding one, for the continuous feeding of a flexible wire 22 in succession along the rear portion 15, along the hook-shaped guide 16 and along the abutment element 19, when the movable portion 17 is closed thereon.

The abutment element 19 has a groove 19a (clearly visible in Figure 4) in a part that is adjacent to the rear portion 15, is open from below for the release of any waste of the wire 14 and is preset to accommodate the free end of the flexible wire 22.

The apparatus 10 also comprises means 23 for cutting the flexible wire 22 (indicated in Figure 2 and in the figures that follow), in order to separate from it the tie 14 that substantially occupies the front portion 13, as indicated in Figure 3.

The first motor 20 is also preset to actuate the cutting means 23.

The third motor 24 is arranged on the rear of the apparatus 10 and is preset for the rotation of a twister 25 that is keyed on the transmission shaft 26, actuating it without reduction.

The twister 25 is arranged downstream of the cutting means 23, for the twisting of a first portion 27 of a tie 14, downstream of the rear portion 15 if one considers the direction of motion of the flexible wire 22 toward the front portion 13, with a last portion 28 of the tie 14 that is guided by the abutment element 19 to the groove 19a.

In particular, as clearly visible from the perspective views, the twister 25 has two opposite crescent-shaped arms 29, which extend from a central body 30, one for moving the first portion 27 and the other for moving the last portion 28 of the tie 14 during its rotation.

The placement of the twister 25 is managed electronically by means of a magnetic sensor (not shown for the sake of simplicity) arranged on the transmission shaft 26, which determines its speed and angular position.

The movable portion 17 of the hook-shaped guide 16 is preset substantially to rotate coaxially to the fixed portion 18, being moved by the first motor 20 by means of a kinematic system 31 (adapted to provide a preferably 1:4 reduction), which comprises a series of gears and a linkage 32 connected by means of a first end 33 to a rack 34 and by means of an opposite second end 35 to the movable portion 17. The rack 34 supports a pin 36 that is integral therewith and is preset to activate the cutting means 23, by acting in a lever-like manner on a lever arm 37 that is integral with a rotating blade 38 (since they are preferably provided in one piece) of the cutting means 23, in the manner shown in Figures 2 and 3 and described better hereinafter.

In particular, the cutting means 23 consist substantially of a flat element that is transverse to the transmission shaft 26 on which it is mounted and is provided with a cutting portion that is the rotating blade 38 and a V-shaped recess that provides the lever arm 27 on which the pin 36 rests in order to impose the rotation of the rotating blade 38.

In the movement of the movable portion 17, final placement is determined by magnetic stroke limiters that are arranged on the rack 34 and are not shown for the sake of simplicity.

In an alternative version, not shown, the cutting means can comprise a blade that is keyed on the transmission shaft 26, upstream of the twister 25 (considering the direction of advancement of the flexible wire 22 pushed from the rear portion 15 to the front portion 13), and rotates integrally therewith.

The rotating blade 38, of the illustrated case, is pivoted on the shaft 26 for transmission of the motion of the third motor 24 to the twister 25 and does not rotate integrally therewith.

It instead rotates during a last rotation arc of the rack 34, after the closure of the movable portion 17 on the abutment element 19. The movable portion 17 is in fact associated with a compensation spring 39, which is accommodated in an end portion 40 of the linkage 32, at its second end 35, and can be compressed along its length after the closure of the movable portion 17.

Conveniently, the apparatus 10 is provided, in the rear region, with a magazine that supports a spool of flexible wire 22, which is not shown. The flexible wire 22 is protected by a first sheath 41 along part of its path inside the rear portion 15. In particular, as shown in Figure 6, the flexible wire 22 wrapped by the first sheath 41 is inserted in the rear portion 15, passing through a second more external sheath 42 that supports the electrical cables 43 for supplying power to the apparatus 10.

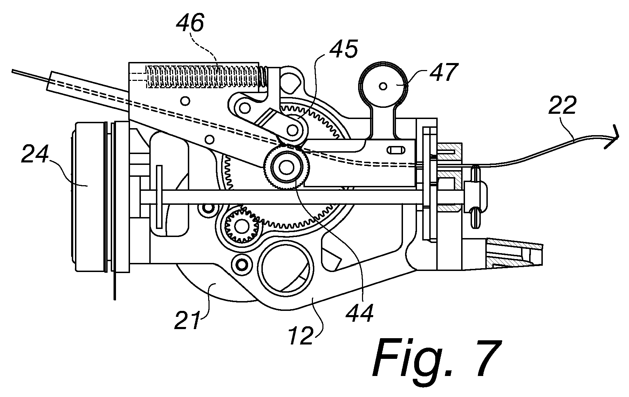

The flexible wire 22 passes through the rear portion 15 of the apparatus 10 and is drawn by means of an adapted traction roller 44, which is actuated by the second motor 21 with a preferably 1:4 reduction. Figure 7 shows the innermost parts.

There is also a tensioning roller 45, which is adapted to keep the flexible wire 22 tensioned inside the apparatus 10, pushed by a spring 46, and a guide 47 for the flexible wire 22 to the exit from the rear portion 15. The guide 47 is preferably detachable.

Conveniently, for the passage of the flexible wire 22 pushed by the second motor 21 downstream of the twister 25 in the front portion 13 of the apparatus 10, the abutment element 19 has a guiding slot 48 for the flexible wire 22 pushed by the second motor 21 beyond the hook-shaped guide 16. The slot substantially guides the part that exits from the hook-shaped guide 16 up to insertion in the groove 19a.

In the first three figures, the abutment element 19 is shown partially in cross-section, so as to allow a clear view of the guiding slot 48, which, as shown in the subsequent Figure 4, is open from above to allow the extraction of the tie 14 after twisting.

Operation of the apparatus according to the invention is as follows.

The apparatus 10 is placed with the hook-shaped guide 16 around the items to be tied, i.e., in the particular field of viticulture, the shoot and the prop.

Upon actuation, the first motor 20 rotates the movable portion 17 until it is brought into abutment against the abutment element 19, surrounding the two items to be tied. The placement of the movable portion 17 is detected by the magnetic sensors arranged on the rack 34, which detect the stroke limit.

During this step, the rotation of the rack 34 causes the movement of the linkage 32, which rotates the movable portion 17. The compensation spring 39 is not compressed.

The second motor 21 moves the flexible wire 22 from the spool of the magazine, arranged upstream of the rear portion 15 of the apparatus 10. The flexible wire 22 passes through the rear portion 15, being tensioned by the adapted tensioning roller 45, pulled by the traction roller 44 and guided by the guide 47 until its exits from the rear portion 15 to be guided into the front one 13 along the hook-shaped guide 16, passing on the fixed portion 18 and on the movable portion 17, which guides it to the abutment element 19, to enter the groove 19a.

From the moment when the movable portion 17 goes into abutment, the pin 36 rests on the lever arm 37 and with a last rotation arc of the rack 34 the pin 36 pushes the lever arm 37, causing the rotation of the rotating blade 38 transversely on the flexible wire 22. In this manner, the rotating blade 38 cuts the flexible wire 22 upstream of the twister 25, in the part that exits from the rear portion 15, separating from the remainder of the flexible wire 22 the tie 14, which must be twisted in order to fasten together the two items to be tied.

In the last arc of rotation of the rack 34, the linkage 32 undergoes a further translation, which, since it cannot be transmitted rotationally to the movable portion 17 that is already in abutment, is compensated with the compression of the compensation spring 39.

In a final step, the third motor 34 then activates the rotation of the twister 25, transmitted by means of the transmission shaft 26, which by turning the first portion 27 and the last portion 28 of the tie 14, with its respective arms 29, causes its twisting.

The magnetic sensor arranged on the transmission shaft 26 determines the speed and angular position of the twister 25, also determining the degree of fastening of the wire according to the number of turns made by the twister 25, which is set by an adapted electronic selector.

The tie 14 thus twisted is extracted by reopening the hook-shaped guide 16 and the apparatus 10 is ready for another tying cycle.

In particular, during reopening the first arc of rotation of the rack 34, in the opposite direction with respect to the preceding one, lifts the pin 36, which, by pushing against the wall of the V-shaped recess that lies opposite the lever arm 37, returns the rotating blade 38 to the initial position. This mechanism can be accompanied conveniently by a return spring of the rotating blade 38.

The various steps of the operation of the apparatus 10 are therefore managed with the three motors.

In this manner, each individual motor is smaller and subjected to lower stresses than the motors of the known solutions of apparatuses.

Moreover, the use of three motors allows to guide the operation of the apparatus more precisely.

In practice it has been found that the invention achieves the intended aim and objects by providing an apparatus for automatic tying that is simplified from a constructive and kinematic point of view and therefore is also more reliable, using three motors to perform the tying steps.

The invention thus conceived is susceptible of numerous modifications and variations, all of which are within the scope of the appended claims; all the details may further be replaced with other technically equivalent elements.

In practice, the materials used, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (10) for laying wire ties, comprising on a supporting body (12):
- a front portion (13), which in turn comprises a hook-shaped guide (16) that is open inwardly, with a movable end portion (17) to be closed on an abutment element (19) so as to surround the items to be tied,
- a first motor (20), for moving said movable portion (17) of the hook-shaped guide (16),
- a second motor (21), for the continuous feeding of a flexible wire (22) in succession along a rear portion (15) of said apparatus (10), along said hook-shaped guide (16) and along said abutment element (19), when said movable portion (17) is closed on the latter,
- means (23) for cutting said flexible wire (22), so as to separate a tie (14) thereof that substantially occupies said front portion (13),
- a third motor (24) for the rotation of a twister (25) adapted to twist a first portion (27) of said tie (14) with a last portion (28).

2. The apparatus according to claim 1, **characterized in that** said first motor (20) is also preset to actuate said cutting means (23).

3. The apparatus according to claim 1, **characterized in that** said movable portion (17) is moved by said first motor (20) by means of a kinematic system (31) that comprises a linkage (32), connected by means of a first end (33) to a rack (34) and by means of an opposite second end (35) to said movable portion (17).

4. The apparatus according to claim 3, **characterized in that** said rack (34) supports a pin (36) that is integral therewith, for the activation of said cutting means (23), being preset to act with a lever-like action on a lever arm (37) that is integral with a rotating blade (38) of said cutting means (23).

5. The apparatus according to claim 4, **characterized in that** said rotating blade (38) is pivoted on a transmission shaft (26) for transmitting the motion of said third motor (24) to said twister (25), rotating during a last rotation arc of said rack (34), after the closure of said movable portion (17) on said abutment element (19), said movable portion (17) being associated with a compensation spring (39) that is accommodated in an end portion (40) of said linkage (32), at said second end (35), and is compressible in length after the closure of said movable portion (17).

6. The apparatus according to claim 1, **characterized in that** said abutment element (19) has a guiding slot (48) for said flexible wire (22) pushed by said second motor (21) beyond said hook-shaped guide (16).

7. The apparatus according to claim 5, **characterized in that** said twister (25) is keyed on said transmission shaft (26) and has two arms (29), one for the movement, during its rotation, of said first portion (27) and the other for the movement of said last portion (28) of said tie (14).

8. The apparatus according to claim 1, **characterized in that** said cutting means (23) comprise at least one blade upstream of said twister (25), with respect to the advancement direction of said flexible wire (22) from said rear portion (15) to said front portion (13), which rotates integrally with said twister (25).

## Patentansprüche

1. Vorrichtung zur Anlage von Drahtbindungen, umfassend auf einem tragenden Körper (12):
- einen vorderen Abschnitt (13), welcher seinerseits eine hakenförmige Führung (16) umfasst, die nach innen offen ist, mit einem beweglichen Endabschnitt (17), welcher an ein Begrenzungselement (19) anstößt, um so die zu bindenden Objekte zu umgeben,
- einen ersten Motor (20) zur Bewegung des genannten beweglichen Abschnitts (17) der hakenförmigen Führung (16),
- einen zweiten Motor (21) für die kontinuierliche Zuführung eines flexiblen Drahtes (22) nacheinander entlang eines hinteren Abschnitts (15) der genannten Vorrichtung (10), entlang der genannten hakenförmigen Führung (16) und entlang des genannten Begrenzungselements (19), wenn der genannte bewegliche Abschnitt (17) an das letztgenannte anstößt,
- ein Mittel (23) zum Schneiden des genannten flexiblen Drahtes (22), um so eine Bindung (14) hiervon abzutrennen, welche im wesentlichen den vorderen Abschnitt (13) einnimmt,
- einen dritten Motor (24) für die Drehung eines Verdrillungselements (25), das konstruiert ist, um einen ersten Abschnitt (27) der genannten Bindung (14) mit einem letzten Abschnitt (28) zu verdrillen.

2. Vorrichtung nach Anspruch 1, **dadurch gekennzeichnet, dass** der genannte erste Motor (20) auch voreingestellt ist, um das genannte Schneidemittel (23) zu betätigen.

3. Vorrichtung nach Anspruch 1, **dadurch gekennzeichnet, dass** der genannte bewegliche Abschnitt (17) durch den genannten ersten Motor (20) mittels eines kinematischen Systems (31) bewegt wird, das ein Verbindungsstück (32) umfasst, welches mit einem ersten Ende (33) an eine Zahnstange (34) und mit einem gegenüberliegenden zweiten Ende (35) an den genannten beweglichen Abschnitt (17) gebunden ist.

4. Vorrichtung nach Anspruch 3, **dadurch gekennzeichnet, dass** die genannte Zahnstange (34) einen Stift trägt, welcher darin integriert ist, zur Betätigung des genannten Schneidemittels (23), der voreingestellt ist, um mit einer hebelartigen Wirkung auf einen Hebelarm (37) einzuwirken, welcher in einer sich drehenden Schneide (38) des Schneidemittels (23) integriert ist.

5. Vorrichtung nach Anspruch 4, **dadurch gekennzeichnet, dass** die sich drehende Schneide (38) auf einer Übertragungsachse (26) drehend gelagert ist, um die Bewegung des genannten dritten Motors (24) auf das genannte Verdrillungselement (25) zu übertragen, das sich während eines letzten Drehungsbogens der genannten Zahnstange (34) nach dem Schließen des genannten beweglichen Abschnitts (17) an dem genannten Begenzungselement (19) dreht, welcher bewegliche Abschnitt (17) mit einer Ausgleichsfeder (39) assoziiert ist, die in einem Endabschnitt (40) des genannten Verbindungstückes (32) an dem genannten zweiten Ende (35) aufgenommen ist, und in der Länge nach dem Anstoßen des genannten beweglichen Abschnitts (17) komprimierbar ist.

6. Vorrichtung nach Anspruch 1, **dadurch gekennzeichnet, dass** das genannte Begrenzungselement (19) einen Führungsschlitz (48) für den genannten flexiblen Draht (22) aufweist, welcher durch den genannten zweiten Motor (21) über die genannte hakenförmige Führung (16) hinaus gedrückt wird.

7. Vorrichtung nach Anspruch 5, **dadurch gekennzeichnet, dass** das genannte Verdrillungselement (25) auf der Übertragungsachse (26) befestigt ist und zwei Arme (29) besitzt, einen für die Bewegung des ersten Abschnitts (27), während dessen Drehung, und den anderen für die Bewegung des genannten letzten Abschnitts (28) der genannten Bindung (14).

8. Vorrichtung nach Anspruch 1, **dadurch gekennzeichnet, dass** das Schneidemittel (23) wenigstens eine Schneide aufweist, welche im Hinblick auf die Beförderungsrichtung des genannten flexiblen Drahtes (22) vom genannten hinteren Abschnitt (15) zum genannten vorderen Abschnitt (13) dem genannten Verdrillungselement (25) vorgeschaltet ist, die sich integral mit dem genannten Verdrillungselement (25) dreht.

## Revendications

1. Appareil (10) pour déposer des liens de fil, comprenant, sur un corps de support (12) :
- une partie avant (13), qui comprend elle-même un guide en forme de crochet (16) qui est ouvert vers l'intérieur, avec une partie d'extrémité mobile (17) destinée à être fermée sur un élément de butée (19) de façon à entourer les éléments devant être liés,
- un premier moteur (20), pour déplacer ladite partie mobile (17) du guide en forme de crochet (16),
- un deuxième moteur (21), pour la délivrance continue d'un fil souple (22) en succession le long d'une partie arrière (15) dudit appareil (10), le long dudit guide en forme de crochet (16) et le long dudit élément de butée (19), lorsque ladite partie mobile (17) est fermée sur ce dernier,
- des moyens (23) pour couper ledit fil souple (22), de façon à séparer un lien (14) de celui-ci qui occupe sensiblement ladite partie avant (13),
- un troisième moteur (24) pour la rotation d'un dispositif de torsion (25) adapté de façon à torsader une première partie (27) dudit lien (14) avec une dernière partie (28).

2. Appareil selon la revendication 1, **caractérisé en ce que** ledit premier moteur (20) est également pré-établi de façon à actionner lesdits moyens de coupe (23).

3. Appareil selon la revendication 1, **caractérisé en ce que** ladite partie mobile (17) est déplacée par ledit premier moteur (20) à l'aide d'un système cinématique (31) qui comprend une liaison (32), reliée à l'aide d'une première extrémité (33) à une crémaillère (34), et, à l'aide d'une deuxième extrémité opposée (35), à ladite partie mobile (17).

4. Appareil selon la revendication 3, **caractérisé en ce que** ladite crémaillère (34) supporte une broche (36) qui est intégrée à celle-ci, pour l'activation desdits moyens de coupe (23), étant pré-établie de façon à agir avec une action du type levier sur un bras de levier (37) qui est intégré à une lame rotative (38) desdits moyens de coupe (23).

5. Appareil selon la revendication 4, **caractérisé en ce que** ladite lame rotative (38) pivote sur un arbre de transmission (26) pour transmettre le mouvement dudit troisième moteur (24) audit dispositif de torsion (25), tournant durant un dernier arc de rotation de ladite crémaillère (34), après la fermeture de ladite partie mobile (17) sur ledit élément de butée (19), ladite partie mobile (17) étant associée à un ressort de compensation (39) qui est reçu dans une partie d'extrémité (40) de ladite liaison (32), à ladite deuxième extrémité (35), et qui est compressible en longueur après la fermeture de ladite partie mobile (17).

6. Appareil selon la revendication 1, **caractérisé en ce que** ledit élément de butée (19) comporte une fente de guidage (48) pour ledit fil souple (22) poussé par ledit deuxième moteur (21) au-delà dudit guide en forme de crochet (16).

7. Appareil selon la revendication 5, **caractérisé en ce que** ledit dispositif de torsion (25) est claveté sur ledit arbre de transmission (26), et comporte deux bras (29), l'un pour le mouvement, durant sa rotation, de ladite première partie (27), et l'autre pour le mouvement de ladite dernière partie (28) dudit lien (14).

8. Appareil selon la revendication 1, **caractérisé en ce que** lesdits moyens de coupe (23) comprennent au moins une lame en amont dudit dispositif de torsion (25), par rapport à la direction d'avance dudit fil souple (22) de ladite partie arrière (15) à ladite partie avant (13), qui tourne d'un seul tenant avec ledit dispositif de torsion (25).
